# EUROPEAN PATENT APPLICATION

(11) **EP 4 748 982 A1**
(43) Date of publication of application: **27.05.2026**
(21) Application number: 24841888.1
(22) Date of filing: 16.01.2024
(51) Int. Cl.: C40B 60/12

(54) **AUTOMATED SCREENING PLATFORM AND SCREENING METHOD**

(30) Priority: 20.07.2023 CN 202310898127; 20.07.2023 CN 202321927363 U
(71) Applicant: Wuxi Apptec (Shanghai) Co., Ltd., Pudong New Area, Shanghai 200131 (CN)
(72) Inventor: LIU, Chang, Shanghai 200131 (CN); ZHANG, Xiaoxing, Shanghai 200131 (CN); QIAN, Siqi, Shanghai 200131 (CN); LIU, Guangxia, Shanghai 200131 (CN); HU, Jiangyue, Shanghai 200131 (CN); MA, Shengbin, Shanghai 200131 (CN); WU, Aliang, Shanghai 200131 (CN); CHEN, Wenting, Shanghai 200131 (CN); XU, Xiaonan, Shanghai 200131 (CN); CUI, Weiren, Shanghai 200131 (CN); SU, Wenji, Shanghai 200131 (CN); KUAI, Letian, Shanghai 200131 (CN)
(74) Representative: Gille Hrabal Partnerschaftsgesellschaft mbB Patentanwälte
(86) International application number: PCT/CN2024/072594
(87) International publication number: WO 2025/015881

(57) **Abstract**

Provided in the present invention are an automated screening platform and a screening method. The automated screening platform comprises: an automated screening device, a driving mechanism, a temperature control module and an electric control module, wherein the automated screening device is provided with a first cavity, an incubation cavity and multiple functional cavities; an injection mechanism is provided in the first cavity, and the injection mechanism comprises an injection push rod provided with a piston; a rotating module is in transmission connection with a switching mechanism, so as to control the switching mechanism to rotate; the driving mechanism can clamp the injection push rod; the temperature control module is configured to heat the incubation cavity; and the electric control module is electrically connected to the rotating module, the driving mechanism and the temperature control module, so as to control the driving mechanism and the temperature control module to work cooperatively. The automated screening platform in the present invention integrates each operation step of a screening experiment, and screening steps are all assembled inside the automated screening device, with little contact with the outside, such that external contamination and component contamination are reduced; and the entire experimental process has a high degree of automation, making experiments more standardized and unified.

## Description

The present application claims priority of the following patent applications:
a prior application with the patent application No. "202310898127.9" entitled "AUTOMATIC SCREENING PLATFORM AND SCREENING METHOD" and filed with China National Intellectual Property Administration on July 20, 2023;
a prior application with the patent application No. "202321927363.0" entitled "AUTOMATIC SCREENING PLATFORM" and filed with China National Intellectual Property Administration on July 20, 2023,
which are incorporated herein by reference in their entirety.

### TECHNICAL FIELD

The present invention relates to the technical field of DNA-encoded compound library screening or drug screening, and in particular to an automated screening platform and a screening method.

### BACKGROUND

Drug discovery, from target screening to final regulatory approval, is a long and complex process. Target screening and identification, as the starting point for drug discovery, are particularly important for the entire process. Therefore, a method that can screen and identify targets quickly and efficiently becomes the key to accelerating and improving the efficiency of drug discovery.

DNA-encoded compound library screening/DEL screening (DNA-encoded library screening) technology is a high-throughput drug discovery technology. The basic principle is combining a large-scale compound library with DNA molecules by using DNA encoding technology to form a DNA-encoded compound library, and then screening the interaction between proteins and encoded compounds to select compounds with high affinity and selectivity. The DEL screening technology can effectively shorten the drug discovery period and reduce the research and development cost, while rapidly identifying high-affinity binders and providing new avenues for drug development. In drug discovery, DEL is widely used to discover new drug targets and candidate molecules and to optimize existing drugs. For example, by screening a drug library, screening a compound library with DEL can reveal potent anticancer leads with relatively high affinity or suggest novel therapeutic approaches for various diseases.

The feature of the DNA-encoded compound library is that it tags each compound with a unique DNA sequence that encodes its structural information. At present, the common screening workflow of DEL is: After an active target protein and a DNA-encoded compound library are incubated manually, high-affinity binders are retained with the protein and thus become enriched, while weak or non-binding compounds are washed away. Since each compound is linked to a specific DNA barcode, the structural information of high-affinity compounds can be obtained through next generation sequencing technology. Those hit compounds are then resynthesized without DNA tags for activity confirmation and structural optimization to produce lead candidates. This overcomes the difficulty in effectively identifying hit compounds when many molecules are screened against targets simultaneously. However, manual experimentation inevitably introduces operator's error, reduces reproducibility, lengthens sample processing times, and hinders standardization of screening procedures.

Currently, there are no automated equipment or instruments dedicated to DEL screening in the market. The screening experiments are mainly performed manually or by other equipment used for extraction and purification. The existing equipment is not fully compatible with certain application scenarios, making certain screening workflows or conditions difficult to implement. There is a relatively high risk of sample cross-contamination when processing many samples, users are required to perform many handling steps, and other such factors.

### SUMMARY

The present invention is aimed at addressing, at least to some extent, one of the technical problems in the DEL screening related art. To this end, the present invention provides an automated screening platform (which may also be referred to as a machine, equipment, or instrument), which comprises:
an automated screening device provided with a first cavity, an incubation cavity, and multiple functional cavities, wherein the first cavity is provided therein with an injection mechanism provided with an injection cavity capable of being in communication with the incubation cavity or the functional cavity through a switching mechanism;
a driving mechanism connected to the injection mechanism and configured to drive the injection mechanism to perform an injection or aspiration operation;
a temperature control module capable of moving relative to the incubation cavity and configured to heat the incubation cavity; and
an electronic control module electrically connected to the driving mechanism and the temperature control module to control coordinated operation of the driving mechanism and the temperature control module.

The automated screening platform of the present invention integrates each operation step of a screening experiment, and the screening steps are all integrated inside the automated screening device and rarely expose to environment, reducing external contamination and cross contamination. The entire experimental process is highly automated, making the experiment more standardized and unified.

According to the automated screening platform of the present invention, an injection push rod is arranged in the injection cavity, and the driving mechanism can clamp the injection push rod and drive the injection push rod to reciprocate along the lengthwise direction of the injection mechanism to perform an injection or aspiration operation.

According to the automated screening platform of the present invention, the automated screening platform further comprises a rotation module in transmission connection with the switching mechanism to control the switching mechanism to rotate, wherein by rotating the switching mechanism, the injection cavity is in communication with the incubation cavity or a designated functional cavity; the electronic control module is electrically connected to the rotation module to control coordinated operation of the rotation module.

According to the automated screening platform of the present invention, the rotation module comprises a first driving component, a first photoelectric sensor, and a docking assembly,
wherein the first driving component is in transmission connection with the docking assembly, the docking assembly is in transmission connection with the switching mechanism, and the first photoelectric sensor is disposed on the first driving component for determining a rotational position of the docking assembly.

According to the automated screening platform of the present invention, the first driving component comprises a stepping motor with a reducer; the docking assembly comprises a rotary disk and an engaging plate fixed at a center of the rotary disk; the stepping motor is in transmission connection with the rotary disk; the engaging plate is in transmission connection with the switching mechanism.

According to the automated screening platform of the present invention, an end of the stepping motor is fixedly provided with a mounting block provided with a central circular hole;
a cylindrical connecting portion is arranged on a lower side of the rotary disk, the connecting portion is in rotation fit with the central circular hole, and the stepping motor is in transmission connection with the rotary disk through the connecting portion;
the first photoelectric sensor is disposed on the mounting block, a detection block rotating synchronously with the rotary disk is disposed on a lower side of the rotary disk, and the first photoelectric sensor determines the rotational position of the docking assembly by sensing the detection block.

According to the automated screening platform of the present invention, the driving mechanism comprises: a second driving component, a transmission assembly, a second photoelectric sensor, and a clamping jaw,
wherein the second driving component is in transmission connection with the transmission assembly; the transmission assembly is in transmission connection with the clamping jaw; the second photoelectric sensor is configured to determine an initial position and an end position of the clamping jaw; the clamping jaw can clamp the injection push rod and driving the injection push rod to reciprocate along the lengthwise direction of injection mechanism.

According to the automated screening platform of the present invention, the second driving component comprises a stepping motor with an encoder, and the transmission assembly comprises a synchronous belt, a synchronous pulley, a lead screw, a first guide rail, and a first slider,
wherein the synchronous belt connects the stepping motor and the synchronous pulley; the synchronous pulley is fixed at an end of the lead screw; the first slider is in sliding fit with the first guide rail; the lead screw is in threaded fit with the first slider; the lead screw is parallel to the first guide rail; the clamping jaw is fixed on the first slider.

According to the automated screening platform of the present invention, the lead screw is fixed by two fixing assemblies, the first slider is located between the two fixing assemblies, and the fixing assembly comprises a bearing matched with the lead screw;
the clamping jaw is an electric clamping jaw or a pneumatic clamping jaw.

According to the automated screening platform of the present invention, the temperature control module comprises: a moving module and a heating module, wherein the heating module is configured to heat the incubation cavity, and the moving module is connected to the heating module and is configured to drive the heating module to move in a horizontal direction and a vertical direction relative to the incubation cavity.

According to the automated screening platform of the present invention, the moving module comprises a third driving component, a second guide rail, a second slider, a first mounting plate, a second mounting plate, a fourth driving component, a third guide rail, and a third slider,
wherein the third driving component and the second guide rail are both fixed on the first mounting plate; the second slider is in sliding fit with the second guide rail; the third driving component is connected to the second slider and is capable of driving the second slider to slide along the second guide rail; the second mounting plate is fixed on the second slider; the fourth driving component and the third guide rail are both fixed on the second mounting plate; the third slider is in sliding fit with the third guide rail; the fourth driving component is connected to the third slider and is capable of driving the third slider to slide along the third guide rail;
the heating module is fixed on the third slider.

According to the automated screening platform of the present invention, a third photoelectric sensor for determining a moving position of the second slider is disposed on the first mounting plate, and a fourth photoelectric sensor for determining a moving position of the third slider is disposed on the second mounting plate;
the third driving component drives the second slider to move in the vertical direction, and the fourth driving component drives the third slider to move in the horizontal direction;
both the first mounting plate and the second mounting plate are L-shaped.

According to the automated screening platform of the present invention, the heating module comprises a heating block, a heating plate, a thermocouple, and a temperature control protection switch,
wherein the heating block is provided with a hollow cavity, and an inlet is formed on a lower side of the hollow cavity to allow the incubation cavity to enter the hollow cavity through the inlet for heating;
the heating plate is located on a top of the heating block, the thermocouple is configured to determine temperatures of the heating block and the heating plate, and the temperature control protection switch is configured to control heating states of the heating block and the heating plate.

According to the automated screening platform of the present invention, the automated screening platform further comprises a housing, wherein the automated screening device, the rotation module, the driving mechanism, the temperature control module, and the electronic control module are all located inside the housing.

According to the automated screening platform of the present invention, the automated screening platform further comprises an ultraviolet disinfection system comprising an ultraviolet lamp, an air intake fan, and an air exhaust fan; the ultraviolet lamp is located inside the housing; the air intake fan is disposed at an air inlet of the housing; the air exhaust fan is disposed at an air outlet of the housing; a display and operation screen is further disposed on an outer side of the housing.

The present invention further provides a screening method, wherein the automated screening platform of the present invention is used.

According to the screening method of the present invention, the screening method is used for screening a compound or drug, and is an affinity screening experiment.

According to the screening method of the present invention, the screening method comprises an incubation phase, a washing phase, and an elution phase.

The method specifically comprises the following steps:
injecting a target protein and a DNA-encoded compound library required for screening into the incubation cavity to complete sample loading;
pre-embedding the incubation cavity with pretreated immobilized resin beads; adding the target protein and the DNA-encoded compound library to the incubation cavity, performing mixed incubation to immobilize the target on the resin beads in the incubation cavity, and simultaneously enabling the small-molecule compounds in the DNA-encoded compound library to bind to the target;
after completing the incubation, aspirating an incubation effluent by the injection mechanism, and sampling the incubation effluent into an empty functional cavity;
when starting a washing process, aspiarting the wash buffer from a functional cavity containing the wash, injecting the wash into the injection mechanism, then injecting the wash into the incubation cavity through the injection mechanism, and performing reciprocal pumping; aspirating a washing waste from the incubation cavity, injecting the washing waste into the injection cavity, and then injecting the washing waste from the injection cavity into a functional cavity for containing a waste liquid to discard the washing waste, thereby completing one washing process; repeating the washing process for multiple times to wash away the unbound small-molecule compounds by the wash;
when starting an elution process, aspirating the elution buffer from another functional cavity containing the elution buffer, injecting the elution buffer into the injection mechanism, then injecting the elution buffer into the incubation cavity through the injection mechanism; heating for a predetermined time to denature the target protein, dissociating the small molecules bound to the target, and making the small molecules enter the eluent; subsequently, injecting the eluent into another functional cavity for storing a sample through the injection mechanism; finally, recovering the small molecules in the eluent as the samples obtained after screening, thereby completing one elution process. This elution process may be repeated as necessary.

According to the screening method of the present invention, in the step of loading the target protein and the DNA-encoded compound library, 5-40 µg of the target protein and 1-1.5 nmol of the DNA-encoded compound library required for screening are injected into the incubation cavity to complete the sample loading.

According to the screening method of the present invention, the target protein and the DNA-encoded compound library are incubated in the incubation cavity 12 at room temperature of 22 °C-30 °C for 30 min-1 h;
the immobilized resin beads are washed for at least 6 times;
small-molecule compounds bound to the target induce denaturation of the target protein via heating at 90 °C-100 °C for 5-15 min, and the compounds with strong binding affinity to the target are collected.

The automated screening platform and the screening method therefor of the present invention integrate each operation step of a manual affinity screening experiment, and the screening steps are all integrated inside the automated screening device and do not expose to the external environment of the instrument, reducing the risk of external contamination and cross contamination. The entire experimental process is highly automated, making the experiment more standardized and consistent. Using the automated screening platform addresses the lack of purpose-built machines for DEL screening. Moreover, the automated screening device can independently isolate each group of samples in a semi-closed space to reduce contamination. Moreover, the automated screening device can modularize experimental steps so different conditions can be easily customized and assembled.

Additional aspects and advantages of the present invention will be set forth in part in the following description and, in part, will be apparent from the following description, or may be learned by practice of the present invention.

### BRIEF DESCRIPTION OF THE DRAWINGS

The accompanying drawings, which are incorporated into and constitute a part of the specification, illustrate the embodiments consistent with the present invention and are used in conjunction with the specification to explain the principles of the present invention.
FIG. 1 is a three-dimensional schematic diagram of an automated screening platform according to an embodiment of the present invention.
FIG. 2 is a three-dimensional schematic diagram of the automated screening platform with a housing hidden according to an embodiment of the present invention.
FIG. 3 is a three-dimensional schematic diagram of an automated screening device according to an embodiment of the present invention.
FIG. 4 is an exploded schematic diagram of an automated screening device according to an embodiment of the present invention.
FIG. 5 is a three-dimensional schematic diagram of a rotation module according to an embodiment of the present invention.
FIG. 6 is an exploded schematic diagram of a rotation module according to an embodiment of the present invention.
FIG. 7 is a three-dimensional schematic diagram of a driving mechanism from a certain viewing angle according to an embodiment of the present invention.
FIG. 8 is a three-dimensional schematic diagram of the driving mechanism from another viewing angle according to an embodiment of the present invention.
FIG. 9 is a three-dimensional schematic diagram of a temperature control module from a certain viewing angle according to an embodiment of the present invention.
FIG. 10 is a three-dimensional schematic diagram of the temperature control module from another viewing angle according to an embodiment of the present invention.

### Reference numerals:

10-automated screening device; 11-first cavity; 12-incubation cavity; 121-filter membrane; 13-functional cavity; 14-switching mechanism; 15-injection mechanism; 151-injection push rod; 16-incubation cavity gasket; 17-functional cavity gasket;
20-rotation module; 21-first driving component; 211-mounting block; 22-first photoelectric sensor; 23-docking assembly; 231-rotary disk; 232-engaging plate; 233-connecting portion; 234-detection block;
30-driving mechanism; 31-second driving component; 32-transmission assembly; 321-synchronous belt; 322-synchronous pulley; 323-lead screw; 324-first guide rail; 325-first slider; 326-fixing assembly; 33-second photoelectric sensor; 34-clamping jaw;
40-temperature control module; 41-third driving component; 42-second guide rail; 43-second slider; 44-first mounting plate; 45-second mounting plate; 46-fourth driving component; 47-third guide rail; 48-third slider;
401-heating block; 402-heating plate; 403-thermocouple; 404-temperature control protection switch;
50-electronic control module;
60-ultraviolet lamp; 61-air intake fan; 62-air exhaust fan;
70-display and operation screen;
80-housing;
90-liquid storage mechanism; 91-liquid distribution mechanism.

### DETAILED DESCRIPTION

The technical solutions of the present invention are further described in detail below with reference to specific examples. It will be appreciated that the following examples are provided for illustrations of the present invention only and should not be construed as limiting the claimed scope of the present invention. All techniques implemented based on content described above of the present invention fall within the claimed scope of the present invention.

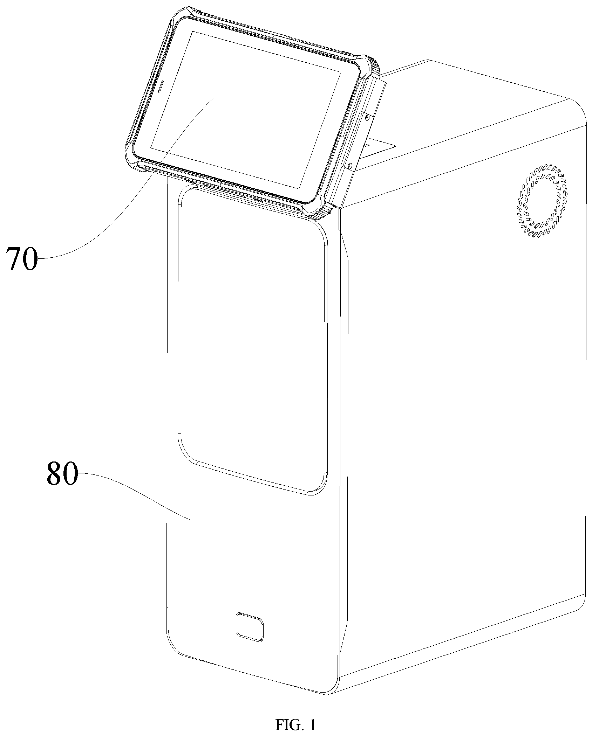

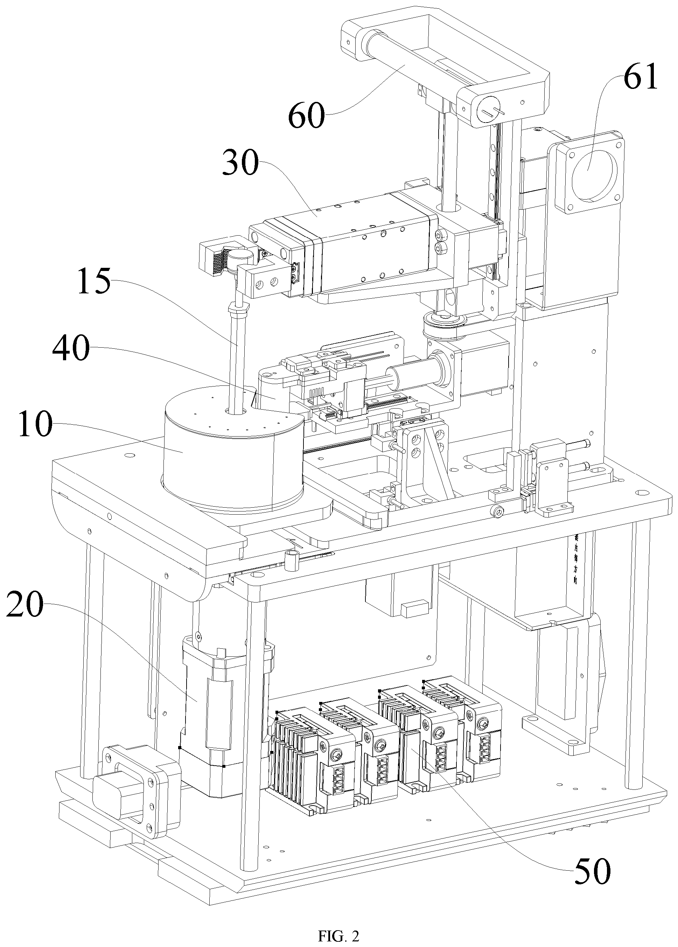

Referring to FIG. 1 and 2, this embodiment provides an automated screening platform that can be used for screening a DNA-encoded compound library.

In some embodiments, the automated screening platform mainly comprises: an automated screening device 10, a driving mechanism 30, a temperature control module 40, and an electronic control module 50. The automated screening device 10, the driving mechanism 30, the temperature control module 40, and the electronic control module 50 can all be located in the inner side of a housing 80, and the housing 80 may not be arranged according to actual conditions.

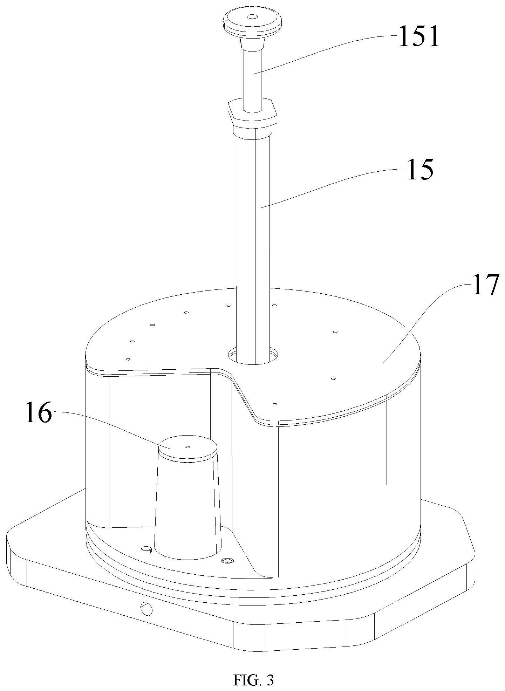

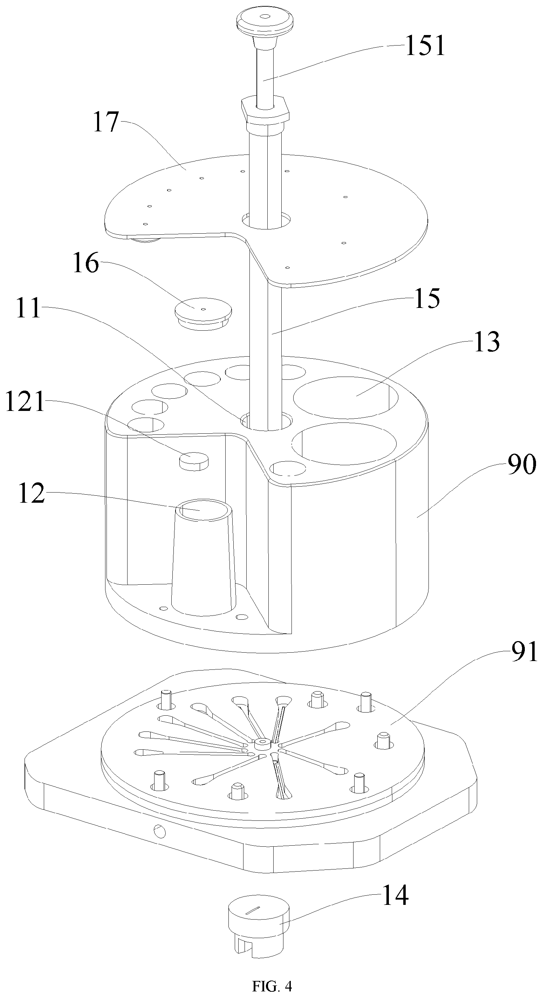

Specifically, referring to FIG. 3 and 4, the automated screening device 10 includes a first cavity 11, an incubation cavity 12, and multiple functional cavities 13. The first cavity 11 contains an injection mechanism 15 with an injection chamber that can be in communication with the incubation cavity 12 or a functional cavity 13 via a switching mechanism 14. The driving mechanism 30 is linked to the injection mechanism 15 and drives the injection mechanism 15 to perform dispensing or aspiration operations. A temperature control module 40 can move relative to the incubation cavity 12 to heat the incubation cavity 12. An electronic control module 50 is electrically connected to both the driving mechanism 30 and the temperature control module 40 to coordinate their operation.

There are various scenarios for the injection cavity to be in communication with the incubation cavity 12 or the functional cavity 13 through the switching mechanism 14. Specifically, the injection cavity may be communicated with only one cavity at the same time while being relatively sealed from other cavities, or may be communicated with two or more cavities simultaneously at the same time. For example: when the injection cavity is communicated with the incubation cavity 12, the injection cavity is relatively sealed from all other functional cavities 13; when the injection cavity is communicated with a certain functional cavity 13, the injection cavity is relatively sealed from all other functional cavities 13 and the incubation cavity 12; in other embodiments, the injection cavity may also be configured to be in communication with two or more functional cavities 13 at the same time.

The automated screening platform of the embodiment described above can integrate each operation step of a screening experiment, and the screening steps are all integrated inside the automated screening device and rarely expose to environment, reducing external contamination and cross contamination between samples. The switching mechanism 14 connected to a syringe realizes the automation of the washing, elution, and collection processes in the screening, and the entire experimental process is highly automated, making the experiment more standardized and unified.

In some embodiments, the automated screening device 10 comprises a liquid distribution mechanism 91, a liquid storage mechanism 90, an injection mechanism 15, and a switching mechanism 14. The first cavity 11, the incubation cavity 12, and multiple functional cavities 13 are all formed in the liquid storage mechanism 90; the injection mechanism 15 is arranged in the first cavity 11, and the first cavity 11 may serve as a mounting cavity of the injection mechanism 15. The injection mechanism 15 is provided with an injection cavity for injecting or aspirating liquid; the liquid distribution mechanism 91 is arranged on the liquid storage mechanism 90 and is configured to allow the injection cavity to be in communication with the incubation cavity 12 or the functional cavity 13, so that the injection cavity is capable of being in communication with the incubation cavity 12 or each of the functional cavities 13 through the liquid distribution mechanism 91. The switching mechanism 14 is arranged on the liquid distribution mechanism 91 and cooperates with the liquid distribution mechanism 91 to allow the injection cavity to be in communication with the incubation cavity 12 or the functional cavity 13 through the liquid distribution mechanism 91. The switching mechanism 14 can change the cavity in communication with the injection cavity, so that the liquid distribution mechanism 91 can perform liquid distribution according to experimental requirements.

The switching mechanism 14 can be used as a switching valve. The injection mechanism 15 can be used as a syringe-like component. The first cavity 11 can be located at a central position of the automated screening device 10, and the incubation cavity 12 and the plurality of functional cavities 13 are arranged around the first cavity 11.

In some embodiments, an injection push rod 151 is arranged in the injection cavity, and the driving mechanism 30 can clamp the injection push rod 151 and driving the injection push rod 151 to reciprocate along the lengthwise direction of the injection mechanism 15 to perform an injection or aspiration operation.

In some embodiments, the automated screening platform further comprises a rotation module 20 in transmission with the switching mechanism 14 to control the switching mechanism 14 to rotate. By rotating the switching mechanism 14, the injection cavity is communicated with the incubation cavity 12 or a designated functional cavity 13. The switching mechanism 14 is provided with multiple rotational positions, and at different positions, the cavities in communication with the injection cavity are also different. Moreover, by rotating the switching mechanism 14, the injection cavity is capable of being in communication with any one of the functional cavities 13 and with the incubation cavity 12, thereby achieving liquid flow between the two communicated cavities. The switching mechanism 14 may also, in a certain rotational position, make the injection cavity not communicate with any cavity. The electronic control module 50 is electrically connected with the rotation module 20 to control coordinated operation of the rotation module 20. In other embodiments, the switching mechanism 14 is also capable of achieving the switching of the cavity communicating with the injection cavity by other control modes, and those skilled in the art can change the switching mode other than "rotation" according to actual needs.

In some embodiments, the automated screening platform mainly includes: an automated screening device 10, a rotation module 20, a driving mechanism 30, a temperature control module 40, an electronic control module 50, and a housing 80. The automated screening device 10, the rotation module 20, the driving mechanism 30, the temperature control module 40, and the electronic control module 50 are all located inside the housing 80.

Referring to FIG. 3 and 4, the automated screening device 10 is provided with a first cavity 11, an incubation cavity 12, and multiple functional cavities 13. The first cavity 11 is provided therein with an injection mechanism 15 provided with an injection cavity in which an injection push rod 151 with a piston is arranged. The injection cavity is capable of being in communication with the incubation cavity 12 and the plurality of functional cavities 13 respectively through the switching mechanism 14, so as to deliver the liquid in the injection mechanism 15 into the incubation cavity 12 and the plurality of functional cavities 13, and transfer the liquid in the incubation cavity 12 and the plurality of functional cavities 13 into the injection mechanism 15. The functional cavities 13 are capable of accommodating wash, eluent, blocking buffer, etc., and an empty functional cavity 13 can be used for sample collection.

Illustratively, a filter membrane 121 may be provided in the incubation cavity 12 so that the immobilized resin beads can smoothly settle and spread on the filter membrane 121 at a bottom of the incubation cavity. When the incubation liquid is aspirated and collected, the immobilized resin beads are retained in the incubation cavity by the filter membrane 121.

The rotation module 20 is in transmission connection with the switching mechanism 14 to control the switching mechanism 14 to rotate, and by rotating the switching mechanism 14, the injection cavity is in connection with the incubation cavity 12 or a designated functional cavity 13. The communication manner between the injection cavity and the incubation cavity 12 or the designated functional cavity 13 includes, but is not limited to, liquid distribution disk communication, pipeline communication, etc.

Illustratively, the DNA-encoded compound library is injected into the incubation cavity 12 first. After the incubation is completed, the liquid in the incubation cavity 12 can be transferred into the injection cavity of the injection mechanism 15, and then the switching mechanism 14 is rotated to make the injection cavity in connection with one of the functional cavities 13. The injection push rod 151 can be pushed to deliver the DNA-encoded compound incubation effluent into the corresponding functional cavity 13.

Further, different functional cavities 13 may be configured with different dimensions and volumes to accommodate different liquids, respectively.

The driving mechanism 30 can clamp the injection push rod 151 and driving the injection push rod to reciprocate along the lengthwise direction of injection mechanism, so as to achieve the extraction, discharge, or transfer of the liquid. The temperature control module 40 can move relative to the incubation cavity 12 for heating the incubation cavity 12, thereby achieving incubation of the compound in the incubation cavity 12 at a designated temperature. The electronic control module 50 is electrically connected to the rotation module 20, the driving mechanism 30, and the temperature control module 40, to control coordinated operation of the rotation module 20, the driving mechanism 30, and the temperature control module 40.

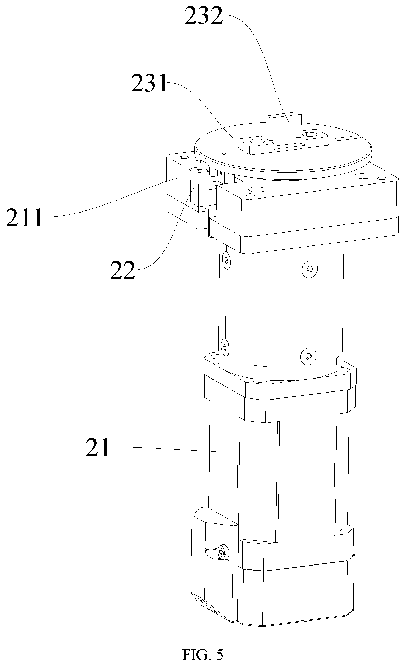

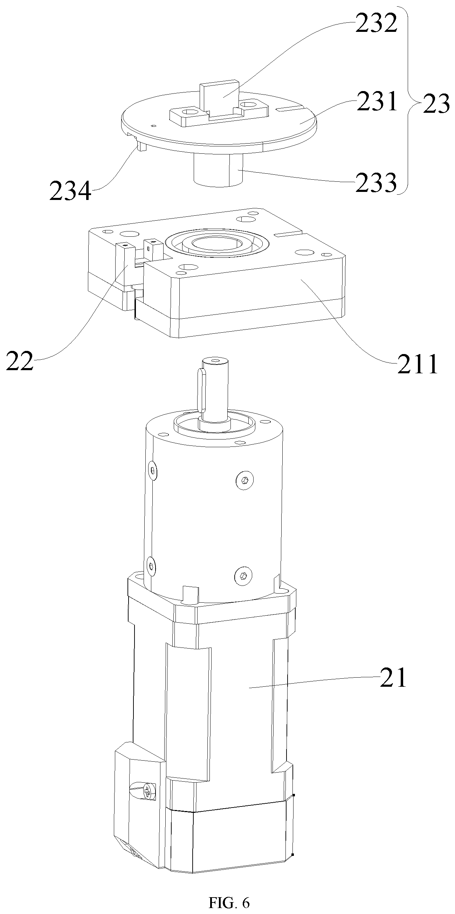

Referring to FIG. 5 and 6, the rotation module 20 comprises a first driving component 21, a first photoelectric sensor 22, and a docking assembly 23; the first driving component 21 is in transmission connection with the docking assembly 23, the docking assembly 23 is in transmission connection with the switching mechanism 14, and the first photoelectric sensor 22 is disposed on the first driving component 21 for determining a rotational position of the docking assembly 23. By arranging the first photoelectric sensor 22, a rotation angle of the first driving component 21 can be accurately controlled, thereby enabling the injection cavity to be in communication with the incubation cavity 12 or a designated functional cavity 13 accurately.

Specifically, the first driving component 21 comprises a stepping motor with a reducer; the docking assembly 23 comprises a rotary disk 231 and an engaging plate 232 fixed at a center of the rotary disk 231; the stepping motor is in transmission connection with the rotary disk 231; the engaging plate 232 is in transmission connection with the switching mechanism 14. A bottom of the switching mechanism 14 is provided with a notch, and the engaging plate 232 is engaged with the notch, thereby driving the switching mechanism 14 to rotate.

Further, a mounting block 211 is fixedly disposed at an end of the stepping motor, and the mounting block 211 is provided with a central circular hole; a cylindrical connecting portion 233 is provided on a lower side of the rotary disk 231, the connecting portion 233 is in rotation fit with the central circular hole, and the stepping motor is in transmission connection with the rotary disk 231 through the connecting portion 233; the first photoelectric sensor 22 is disposed on the mounting block 211. That is to say, the first photoelectric sensor 22 can be directly disposed on the first driving component 21, or indirectly disposed on the first driving component 21 through the mounting block 211. A detection block 234 rotating synchronously with the rotary disk 231 is disposed on a lower side of the rotary disk 231, and the first photoelectric sensor 22 determines the rotational position of the docking assembly 23 through the detection block 234.

In some embodiments, functional cavities 13 are covered with a functional cavity gasket 17, and the incubation cavity 12 is covered with an incubation cavity gasket 16; the functional cavity gasket 17 is provided with multiple small holes, each small hole corresponding to one functional cavity, and a small hole is formed in the incubation cavity gasket 16. By arranging the functional cavity gasket 17 and the incubation cavity gasket 16, impurities can be prevented from entering the functional cavities 13 and the incubation cavity 12. In addition, flowability of the liquid injection and output is ensured by the small holes provided.

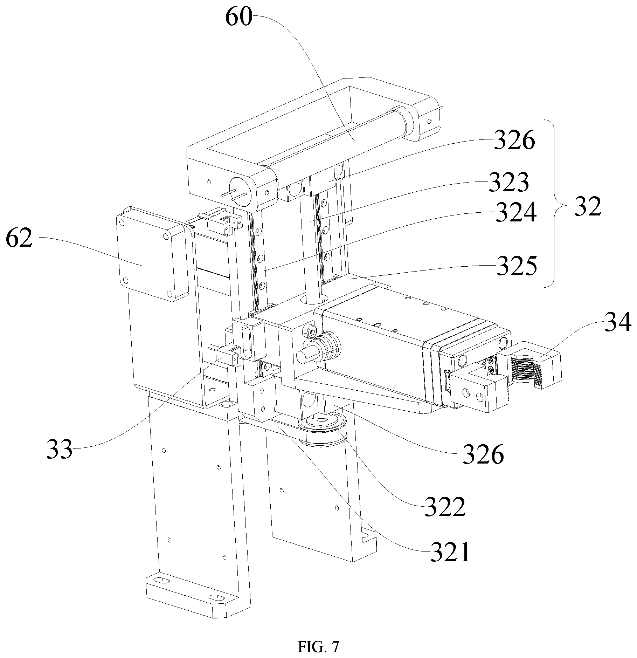

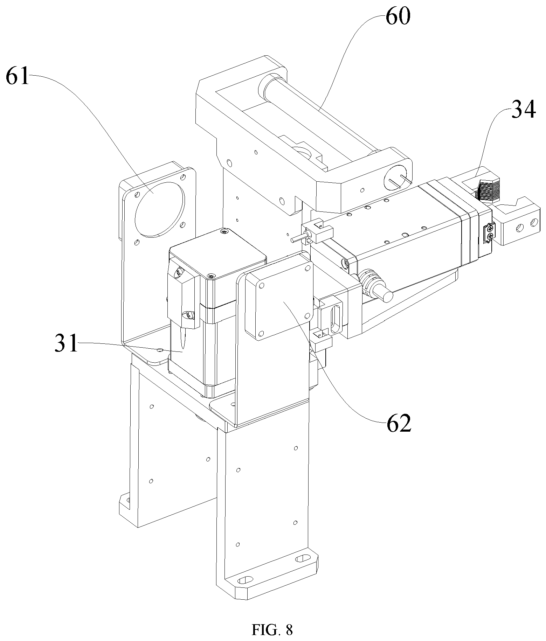

In some embodiments, referring to FIG. 7 and 8, the driving mechanism 30 comprises: a second driving component 31, a transmission assembly 32, a second photoelectric sensor 33, and a clamping jaw 34. The second driving component 31 is in transmission connection with the transmission assembly 32; the transmission assembly 32 is in transmission connection with the clamping jaw 34; the second photoelectric sensor 33 is configured to determine an initial position and an end position of the clamping jaw 34; the clamping jaw 34 can clamp the injection push rod and driving the injection push rod to reciprocate in the lengthwise direction of the injection mechanism 15.

Specifically, the second driving component 31 comprises a stepping motor with an encoder, and the transmission assembly 32 comprises a synchronous belt 321, a synchronous pulley 322, a lead screw 323, a first guide rail 324, and a first slider 325. The synchronous belt 321 connects the stepping motor and the synchronous pulley 322; the synchronous pulley 322 is fixed at an end of the lead screw 323; the first slider 325 is in sliding fit with the first guide rail 324; the lead screw 323 is in threaded fit with the first slider 325, the lead screw 323 is parallel to the first guide rail 324; the clamping jaw 34 is fixed on the first slider 325. The first guide rail 324 and the second driving component 31 may be mounted on different surfaces of the same fixing plate. Two first guide rails 324 may be provided, and both first guide rails 324 are in sliding fit with the first slider 325, thereby ensuring stability of movement of the first slider 325. The lead screw 323 is inserted through a middle part of the first slider 325 and is in threaded fit with the first slider 325; as the lead screw 323 rotates, the first slider 325 moves in a lengthwise direction of the lead screw 323.

In the embodiment described above, the first guide rail 324 and the lead screw 323 are parallel to each other.

Further, the lead screw 323 is fixed by two fixing assemblies 326, the first slider 325 is located between the two fixing assemblies 326, and the fixing assembly 326 comprises a bearing matched with the lead screw 323, thereby reducing rotational resistance of the lead screw 323.

In some embodiments, the clamping jaw 34 is an electric clamping jaw or a pneumatic clamping jaw.

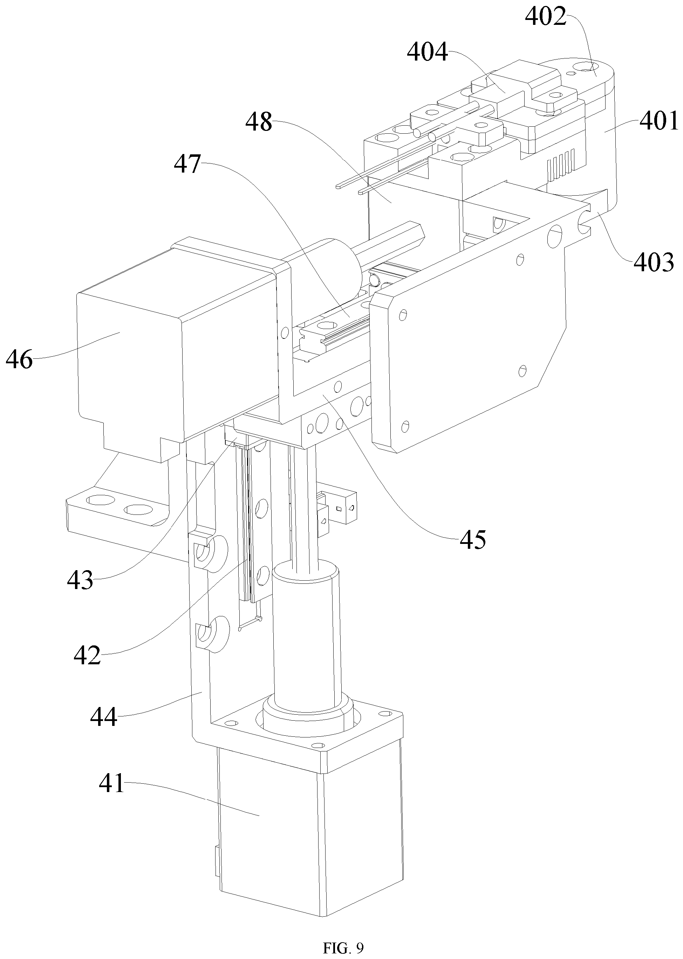

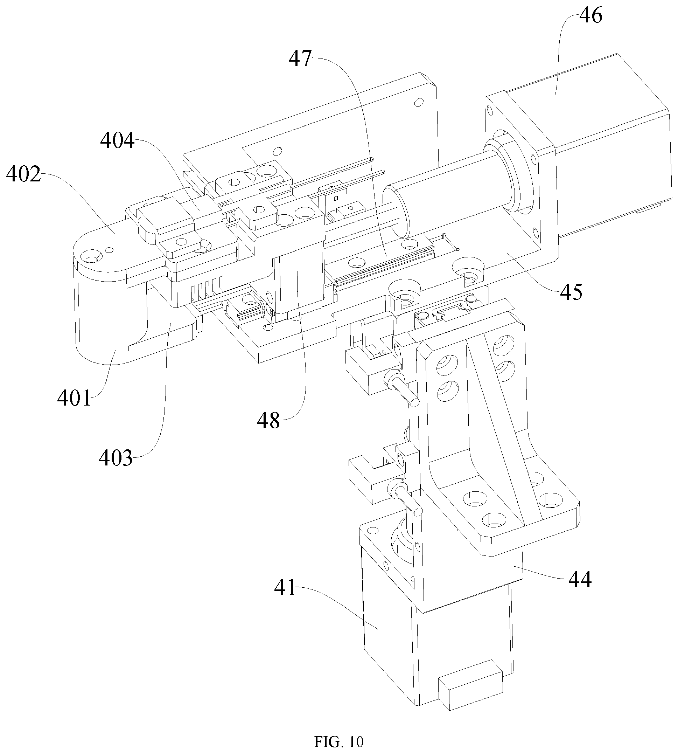

Referring to FIG. 9 and 10, the temperature control module 40 comprises: a moving module and a heating module. The heating module is configured to heat the incubation cavity 12, and the moving module is connected to the heating module and is configured to drive the heating module to move in a horizontal direction and a vertical direction relative to the incubation cavity 12. The heating module can be controlled to move to a position where the heating module heats the incubation cavity 12 or withdraw from the position where the heating module heats the incubation cavity 12 by the moving module. A moving direction of the moving module at least includes a horizontal direction and a vertical direction. The moving module may also be a multi-degree-of-freedom manipulator.

Specifically, the moving module comprises a third driving component 41, a second guide rail 42, a second slider 43, a first mounting plate 44, a second mounting plate 45, a fourth driving component 46, a third guide rail 47, and a third slider 48. The third driving component 41 and the second guide rail 42 are both fixed on the first mounting plate 44; the second slider 43 is in sliding fit with the second guide rail 42; the third driving component 41 is connected to the second slider 43 and can drive the second slider 43 to slide along the second guide rail 42; the second mounting plate 45 is fixed on the second slider 43 and moves synchronously with the second slider 43.

The fourth driving component 46 and the third guide rail 47 are both fixed on the second mounting plate 45, the third slider 48 is in sliding fit with the third guide rail 47, and the fourth driving component 46 is connected to the third slider 48 and can drive the third slider 48 to slide along the third guide rail 47; the heating module is fixed on the third slider 48.

Both the third driving component 41 and the fourth driving component 46 can adopt synchronous motors with encoders.

Further, a third photoelectric sensor for determining a moving position of the second slider 43 is disposed on the first mounting plate 44, and a fourth photoelectric sensor for determining a moving position of the third slider 48 is disposed on the second mounting plate 45; the third driving component 41 drives the second slider 43 to move in the vertical direction, and the fourth driving component 46 drives the third slider 48 to move in the horizontal direction; both the first mounting plate 44 and the second mounting plate 45 are L-shaped.

Referring to FIG. 9 and 10, the heating module comprises a heating block 401, a heating plate 402, a thermocouple 403, and a temperature control protection switch 404. The heating block 401 is provided with a hollow cavity, and an inlet is formed on a lower side of the hollow cavity to allow the incubation cavity 12 to enter the hollow cavity through the inlet for heating; the heating plate 402 is located on a top of the heating block 401; the thermocouple 403 is configured to determine a temperature of the heating block 401; the temperature control protection switch 404 is configured to prevent the heating block 401 from over-temperature heating.

In some embodiments, the automated screening platform further comprises an ultraviolet disinfection system comprising an ultraviolet lamp 60, an air intake fan 61, and an air exhaust fan 62. The ultraviolet lamp 60 is located inside the housing 80 and can provide global irradiation to achieve a sufficient coverage area. The air intake fan 61 is disposed at an air inlet of the housing 80, and the air exhaust fan 62 is disposed at an air outlet of the housing 80; an environment inside the housing 80 can be greatly improved by arranging the ultraviolet disinfection system, thereby preventing bacterial growth. During use, the air intake fan 61 and the air exhaust fan 62 work simultaneously to accelerate circulation of air inside the housing 80.

A display and operation screen 70 is further disposed on an outer side of the housing 80. The display and operation screen 70 mainly provides instrument parameter configuration and process prompts during work.

This embodiment further provides a screening method for an automated screening platform, wherein the automated screening platform is the automated screening platform in any one of the embodiments described above. This screening method is simple to operate, has a high degree of automation, and is not prone to sample contamination during operation.

Further, the screening method described above can be used for screening a compound or drug.

In some embodiments, the screening method mainly comprises an incubation phase, a washing phase, and an elution phase.

Specifically, the screening method comprises the following steps:
Incubation phase: injecting the target protein and the DNA-encoded compound library required for screening into the incubation cavity 12 to complete sample loading; pre-embedding the incubation cavity 12 with pretreated immobilized resin beads; adding the target protein and the DNA-encoded compound library to the incubation cavity, mixing with beads and starting incubation process to immobilize the target on the resin beads in the incubation cavity, and simultaneously enabling the small-molecule compounds in the DNA-encoded compound library to bind to the target; after completing the incubation, aspirating the incubation effluent (flow through) by the injection mechanism 15, and sampling the incubation effluent into an empty functional cavity 13.
Washing phase: when starting a washing process, aspirating the wash buffer from the functional cavity 13, injecting the wash buffer into the injection mechanism 15, then injecting the wash buffer into the incubation cavity 12 through the injection mechanism 15, and performing reciprocal pumping; aspirating the washing waste from the incubation cavity, injecting the washing waste into the injection cavity, and then injecting the washing waste from the injection cavity into the functional cavity 13 which is set for containing waste buffer to discard the washing waste, thereby completing one washing process; repeating the washing multiple times to wash away the unbound small-molecule compounds.
Elution phase: when starting an elution process, aspirating the elution buffer from another functional cavity 13 containing the elution buffer, injecting the elution buffer into the injection mechanism 15, then injecting the elution buffer into the incubation cavity 12 through the injection mechanism 15; heating for a predetermined time to denature the target protein, dissociating the small molecules bound to the target, and releasing the small molecules into the eluent; subsequently, injecting the eluent into another functional cavity 13 which is set for storing sample solution through the injection mechanism 15; finally, recovering the small molecules in the eluent as the samples obtained after screening, thereby completing one elution process. This elution process may be repeated as necessary.

In a specific embodiment, the screening method comprises the following steps:
Manually injecting 5-40 µg of the target protein and 1-1.5 nmol of the DNA-encoded compound library required for screening into the incubation cavity 12 via a pipette or other equipment to complete sample loading, and activating the automated screening platform to perform the subsequent automated screening process; specifically, pre-embedding the incubation cavity 12 with pretreated immobilized resin beads; adding the target protein and the DNA-encoded compound library to the incubation cavity 12, mixing with beads and starting incubation process to immobilize the target on the resin beads in the incubation cavity, and simultaneously enabling the small-molecule compounds in the DNA-encoded compound library to bind to the target;
After completing the incubation, aspirating an incubation effluent by the injection mechanism 15, and sampling the incubation effluent into one empty functional cavity 13;
When starting a washing process, aspirating the wash buffer from the functional cavity 13, injecting the wash buffer into the injection mechanism 15, then injecting the wash buffer into the incubation cavity 12 through the injection mechanism 15, and performing reciprocal pumping; aspirating the washing waste from the incubation cavity, injecting the washing waste into the injection cavity, and then injecting the washing waste from the injection cavity into the functional cavity 13 which is set for containing waste buffer to discard the washing waste, thereby completing one washing process; repeating the washing multiple times to wash away the unbound small-molecule compounds.;
When starting an elution process, aspirating the elution buffer from another functional cavity 13 containing the elution buffer, injecting the elution buffer into the injection mechanism 15, then injecting the elution buffer into the incubation cavity 12 through the injection mechanism 15; heating for a predetermined time to denature the target protein, dissociating the small molecules bound to the target, and releasing the small molecules into the eluent; subsequently, injecting the eluent into another functional cavity 13 which is set for storing sample solution through the injection mechanism 15; finally, recovering the small molecules in the eluent as the samples obtained after screening, thereby completing one elution process. This elution process may be repeated as necessary.

Further, in the embodiment described above, the target protein and the DNA-encoded compound library are incubated in the incubation cavity 12 at room temperature of 22 °C-30 °C, specifically 25 °C, for 30 min-1 h; the immobilized resin beads are washed at least 6 times in the washing process; the small molecules binding to the target are heated at 90 °C-100 °C for 5-15 min to denature the target protein, specifically 95 °C for 10 min to denature the target protein.

After the screening experiment is completed, the sample after screening is recovered and subjected to next generation sequencing (NGS) to determine the types of molecules obtained by screening.

Among them, the target protein can be changed according to experimental requirements, including but not limited to a protein, a ribonucleic acid (RNA), etc.

Among them, the immobilized resin beads required for immobilizing the target protein can be selected as needed, and the available immobilization methods include, but are not limited to, binding of a polyhistidine tag (His tag) to nickel-nitrilotriacetic acid (Ni-NTA), binding of biotin to avidin, binding of glutathione S-transferase (GST) to glutathione (GSH), and other methods.

Among them, the elution method may adopt a method of denaturing the target protein by heating, or competitive elution using molecules with higher affinity for the immobilized groups. Due to technical characteristics, a large number of small-molecule compounds in the DNA-encoded compound library that do not bind to the target protein may cause background noise. And the screening experimental condition parameters usually can be verified by positive small molecules known to bind to the target protein.

Among them, multiple rounds of screening can be performed to achieve multiple rounds of enrichment of binding molecules and improve the signal-to-noise ratio. The freshly prepared target protein solution needs to be added in the next round, and the molecules eluted in the last round are used as input samples. Then the screening steps described above are repeated.

The optimized incubation time, the optimized amount of resin beads, and the optimized amount of the protein save time and costs; the optimized amount of the wash and washing frequency give stable and accurate screening data.

As for the screening method, this embodiment further provides the following comparative examples and examples, which are specifically as follows.

### Comparative Example-Manual Screening Experimental Group

Incubation phase: 5 µg of the target protein, 120 µL of the pre-washed immobilized resin beads, and a positive compound with a molecular count of 2E11 were added to the spin column and incubated for 1 h. No protein was added to the control group. The supernatant (Flow through) after the incubation was collected.

Washing phase: 600 µL of the wash buffer was added to the centrifuge tube each time, and washing was performed 10 times. Each wash was collected.

Elution phase: 200 µL of the elution buffer was added to the spin column, and the column was placed on a thermostatic incubator and heated at 95 °C for 10 min. The sample was collected. Elution was repeated, and the sample was collected again.

The screening was performed in two rounds. Fractions were collected, and quantitative analysis was performed on the fractions using qPCR. The amount of positive molecules contained in each fraction is shown in Supplementary Tables 1.1 and 1.2.

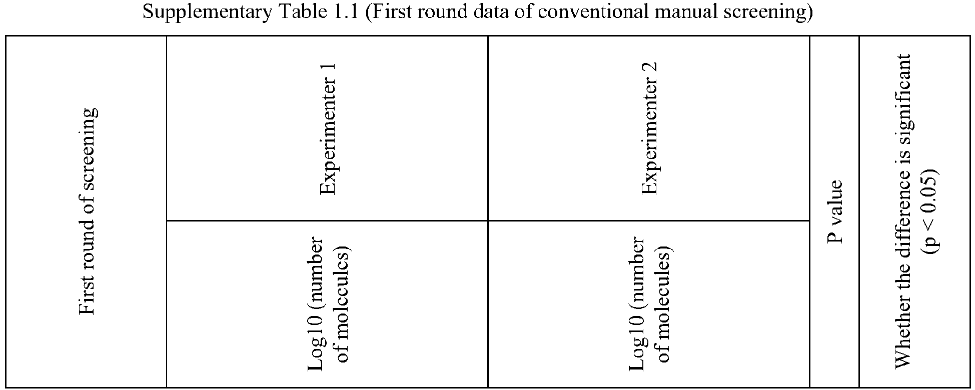

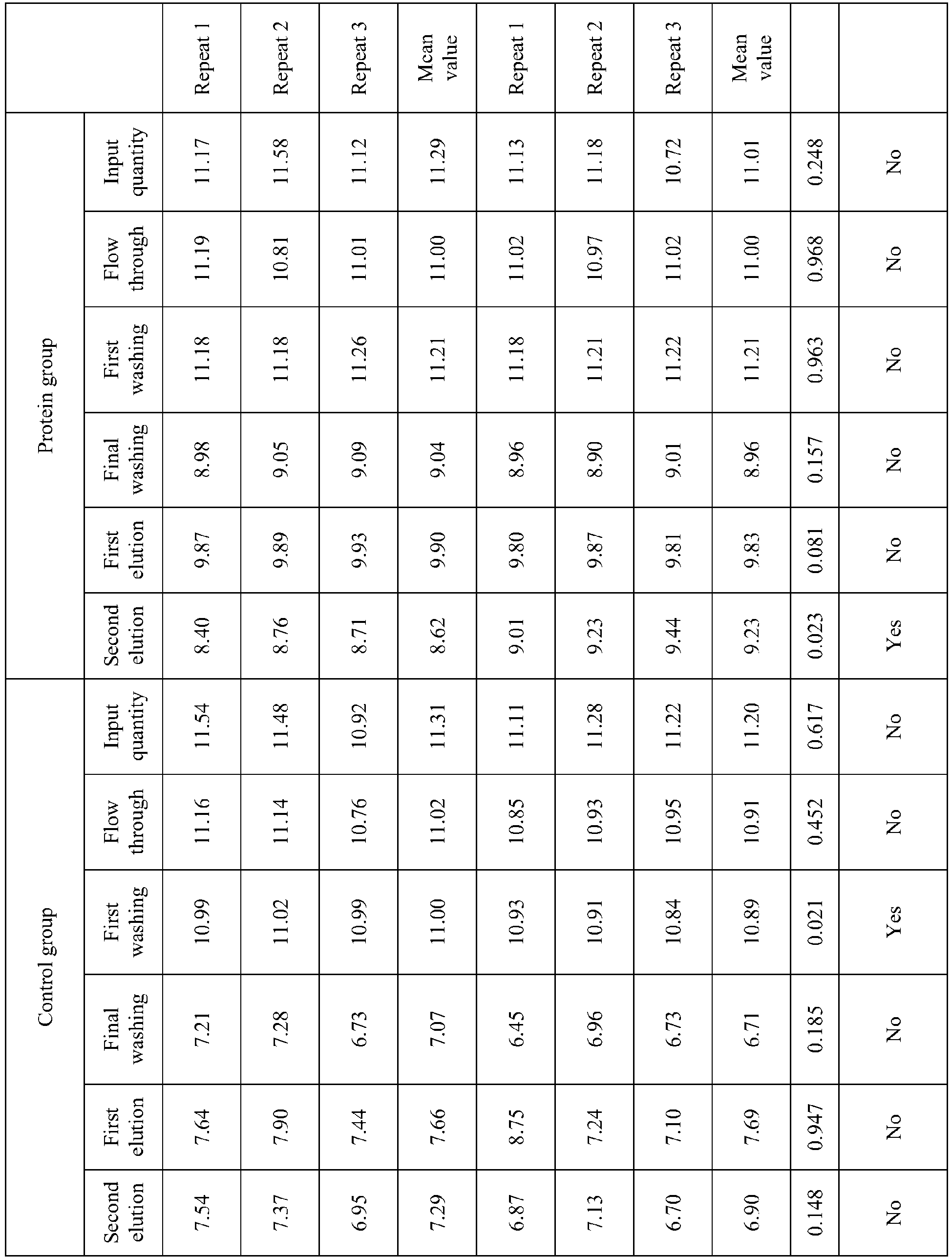

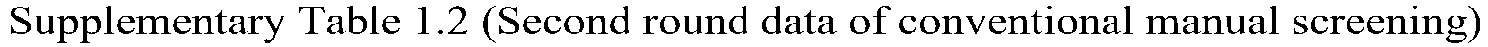

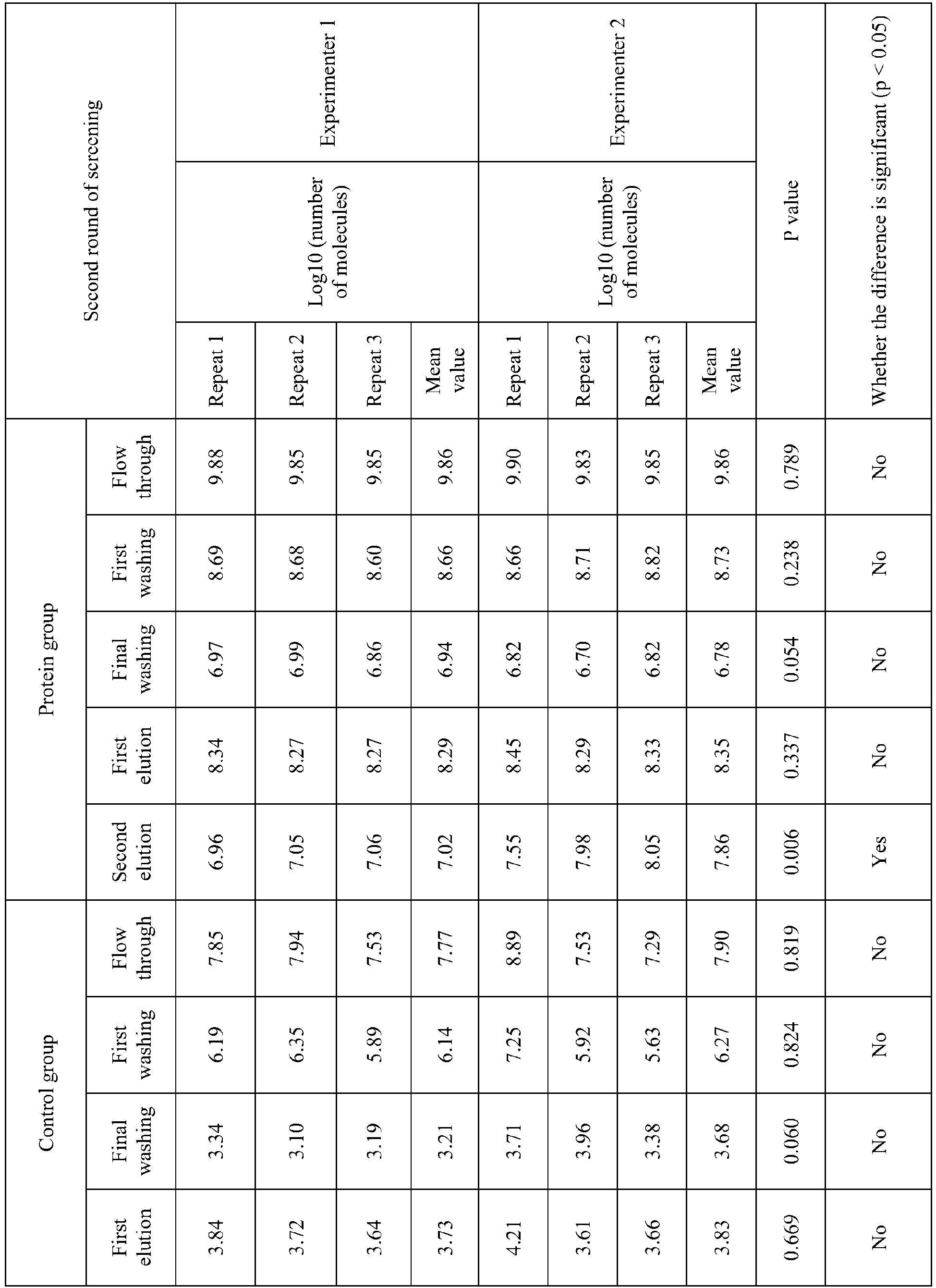

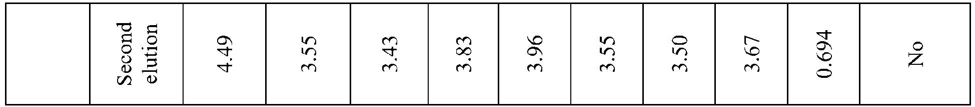

### Example-Automated Screening Experimental Group

The process of the automated screening platform was set up and checked.

Incubation phase: 5 µg of the target protein, 120 µL of the pre-washed immobilized resin beads, and a positive compound with a molecular count of 2E11 were added to the incubation cavity and incubated for 1 h. No protein was added to the control group. The supernatant (Flow through) after the incubation was collected into the corresponding cavity.

Washing phase: For the washing step, the volume of the wash buffer per washing was 1000 µL, and washing was performed 6 times. Each wash was collected.

Elution phase: The incubation cavity with 200 µL of the elution buffer added was heated to 95 °C for a duration of 10 min. The elution was collected into the sample collection cavity. This step was repeated once.

The screening was performed in two rounds.

Fractions were collected, and quantitative analysis was performed on the fractions using qPCR. The amount of positive molecules contained in each fraction is shown in Supplementary Tables 2.1 and 2.2.

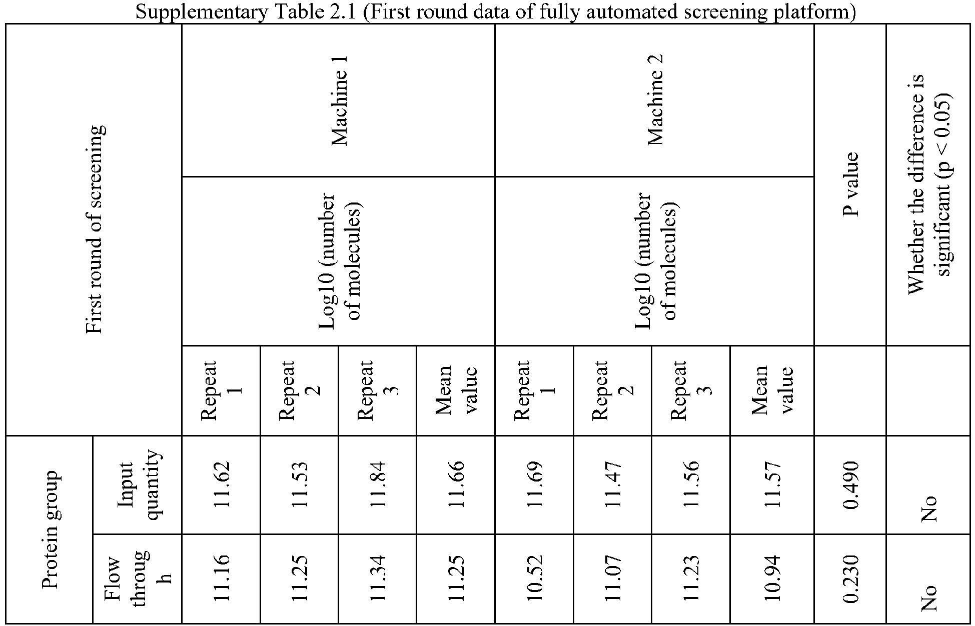

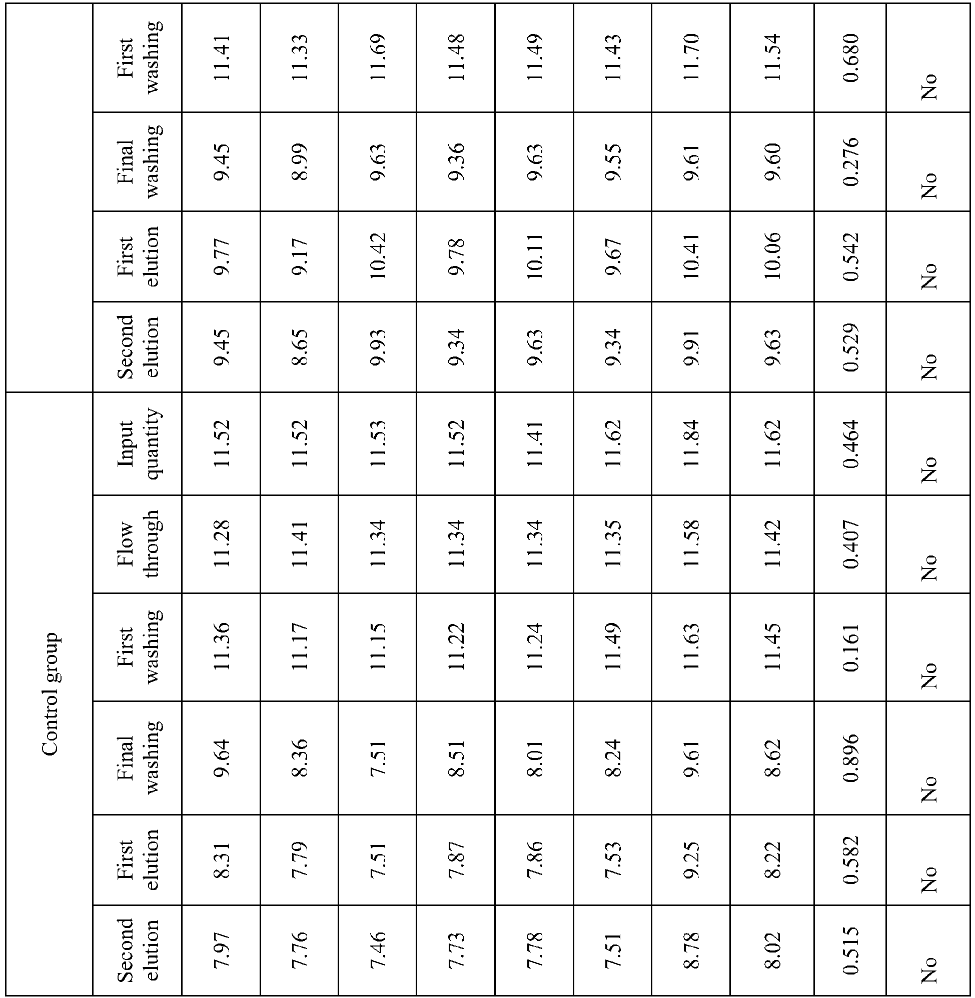

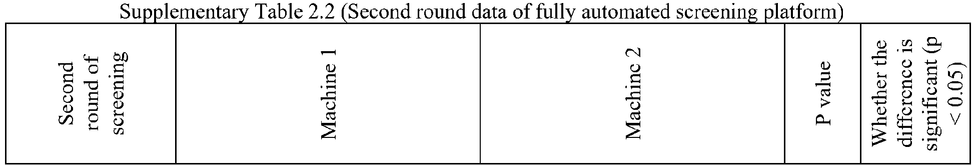

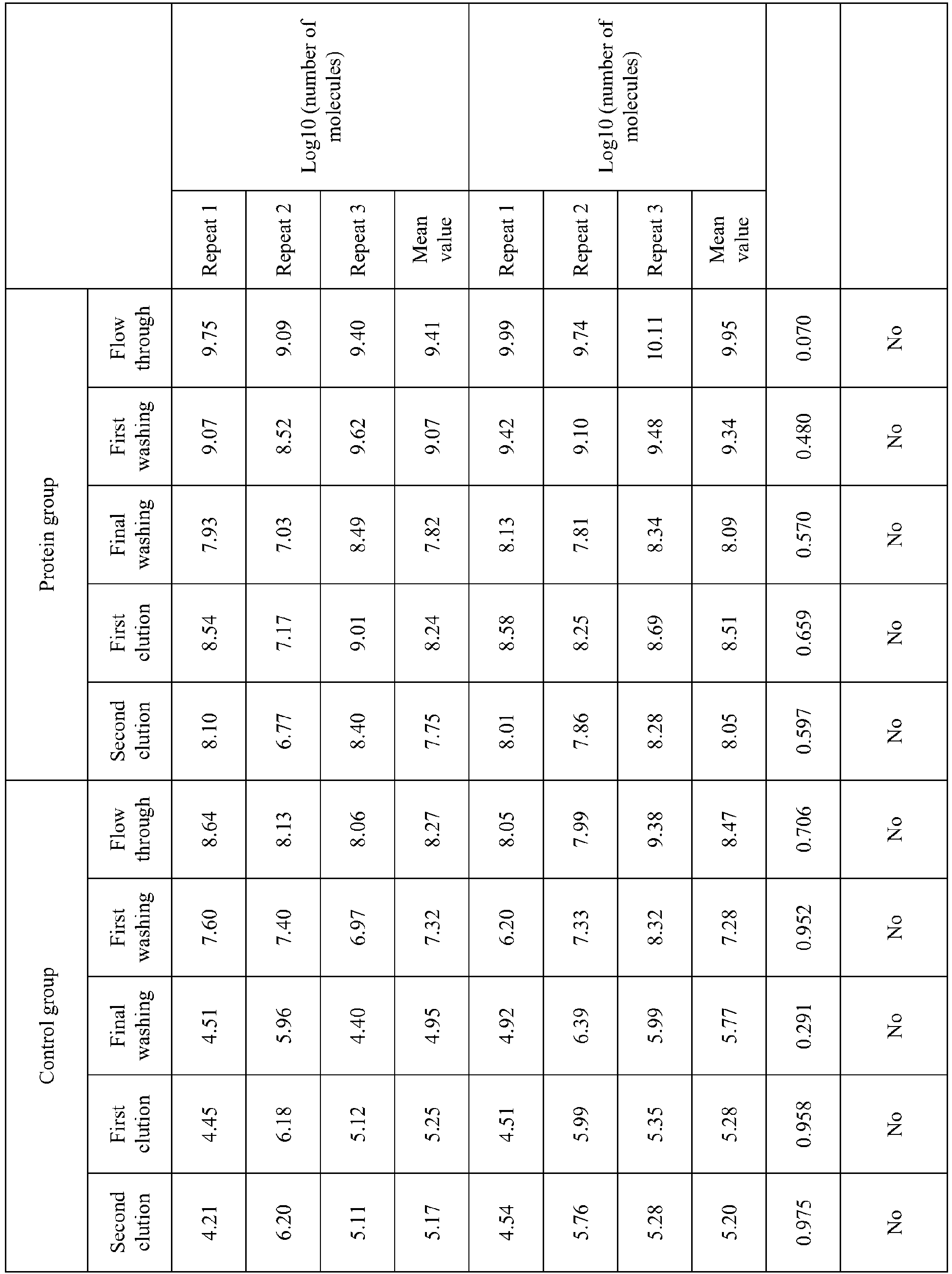

By analyzing the results of the Comparative Example and the Example, the automated screening platform can effectively implement and complete the screening experiment in accordance with the predetermined experimental protocol. 1) Both the Comparative Example and Example confirm that the target protein can effectively immobilize the screened positive molecules, and the recovery amount of eluted molecules in the protein group is much higher than that in the control group. 2) When comparing the protein groups of the automated screening experiment and the manual screening experiment, molecules of a similar order of magnitude were obtained in both groups; for the control group, except in the second round of screening, the number of screened molecules was also similar. Regarding the difference in the second round of screening of the control group, the reason lies in the dead volume limitation of the automated screening device: the washing efficiency decreases when the liquid concentration is low. However, this does not affect the determination of the screening result 1). 3) After t-tests were performed between the two groups of experiments respectively performed in the Comparative Example and the Example, there is no statistically significant difference in the number of molecules between the two automated screening platforms in the treatment of samples from each sample. In contrast, the manual operation shows statistically significant differences in both the second elution of the protein group and the first washing of the control group. This further indicates that the automated screening platform of the present invention does not cause differences in the number of molecules during the operation, and is more stable and reproducible than the manual experiment.

In the description of the present invention, it is important to understand that terms such as "center", "longitudinal", "transverse", "length", "width", "thickness", "up", "down", "front", "rear", "left", "right", "vertical", "horizontal", "top", bottom", "inner", "outer", "clockwise", "counterclockwise", "axial", "radial", "circumferential" and other directional or positional indications are based on the orientations or position shown in the accompanying drawings. They are used to facilitate the description of the present invention as well as to simplify the description. These terms do not suggest or imply that the device or elements indicated must have specific orientations, or be constructed or operated in specific orientations. Therefore, these terms should not be construed as limiting the present invention.

Moreover, the terms "first" and "second" are used for descriptive purposes only and do not indicate or imply relative importance or suggest a specific quantity of the indicated technical features. Features defined with "first" or "second" may explicitly or implicitly include at least one such feature. In the description of the present invention, the term "multiple" means at least two, for example, two, three, etc., unless explicitly specified otherwise.

In the present invention, unless explicitly specified and limited otherwise, terms such as "installation", "connection", and "fixation" should be broadly interpreted. For example, they could denote fixed connections, detachable connections, or integral connections. They could represent mechanical connection, electrical connection, or communication among themselves. They could mean direct connection or indirect connection through intermediation. They could denote intercommunication between two elements or the interactive relationship between two elements unless specifically limited otherwise. For those ordinary technicians in this field, the specific meanings of the terms described above in the present invention can be understood according to the specific circumstances.

In the present invention, unless explicitly specified and limited otherwise, the first feature "above" or "below" the second feature may indicate direct contact between the first and second features, or indirect contact therebetween through an intermediation. Moreover, the first feature "above", "on", or "on top of" the second feature may indicate that the first feature is positioned directly or diagonally above the second feature, or simply represent that the horizontal level of the first feature is higher than the second feature. The first feature "below", "underneath", or "beneath" the second feature may indicate that the first feature is positioned directly or diagonally below the second feature, or simply represent that the horizontal level of the first feature is lower than the second feature.

In the present invention, terms such as "an embodiment", "some embodiments", "example", "a specific example", "some examples", or the like mean that a specific feature, structure, material, or characteristic described in reference to the embodiment or example is included in at least one embodiment or example of the present invention. In this specification, the schematic descriptions of the terms described above do not necessarily refer to the same embodiment or example. Moreover, the specific features, materials, structures, and other characteristics described may be combined in any one or more embodiments or examples in an appropriate manner. Moreover, various embodiments or examples and features of various embodiments or examples described in this specification can be combined by those technicians skilled in this field as far as they do not contradict each other.

Although embodiments of the present invention are illustrated and described above, it will be appreciated that the above embodiments are exemplary and not to be construed as limiting the present invention. Variations, modifications, substitutions, and alterations can be made to the above embodiments by those ordinary technicians in this field within the scope of the present invention. Any such modifications, equivalent replacements, or improvements made in accordance with the spirit and principles of the invention should be considered within the scope of the present invention.

## Claims

1. An automated screening platform, comprising:
an automated screening device (10), wherein the automated screening device (10) is provided with a first cavity (11), an incubation cavity (12), and multiple functional cavities (13), wherein the first cavity (11) is provided therein with an injection mechanism (15), wherein the injection mechanism (15) is provided with an injection cavity capable of being in communication with the incubation cavity (12) or the functional cavity (13) through a switching mechanism (14);
a driving mechanism (30), wherein the driving mechanism (30) is connected to the injection mechanism (15) and configured to drive the injection mechanism (15) to perform an injection or aspiration operation;
a temperature control module (40), wherein the temperature control module (40) is capable of moving relative to the incubation cavity (12) and configured to heat the incubation cavity (12); and
an electronic control module (50), wherein the electronic control module (50) is electrically connected to the driving mechanism (30) and the temperature control module (40) to control coordinated operation of the driving mechanism (30) and the temperature control module (40).

2. The automated screening platform according to claim 1, wherein an injection push rod (151) is arranged in the injection cavity, and the driving mechanism (30) can clamp the injection push rod (151) and driving the injection push rod (151) to reciprocate in the lengthwise direction of the injection mechanism (15) to perform an injection or aspiration operation.

3. The automated screening platform according to claim 2, further comprising a rotation module (20), wherein the rotation module (20) is in transmission connection with the switching mechanism (14) to control the switching mechanism (14) to rotate, wherein by rotating the switching mechanism (14), the injection cavity is in communication with the incubation cavity (12) or a designated functional cavity (13); the electronic control module (50) is electrically connected to the rotation module (20) to control coordinated operation of the rotation module (20).

4. The automated screening platform according to claim 3, wherein the rotation module (20) comprises a first driving component (21), a first photoelectric sensor (22), and a docking assembly (23),
wherein the first driving component (21) is in transmission connection with the docking assembly (23), the docking assembly (23) is in transmission connection with the switching mechanism (14), and the first photoelectric sensor (22) is disposed on the first driving component (21) for determining a rotational position of the docking assembly (23).

5. The automated screening platform according to claim 4, wherein the first driving component (21) comprises a stepping motor with a reducer; the docking assembly (23) comprises a rotary disk (231) and an engaging plate (232) fixed at a center of the rotary disk (231); the stepping motor is in transmission connection with the rotary disk (231); the engaging plate (232) is in transmission connection with the switching mechanism (14).

6. The automated screening platform according to claim 5, wherein an end of the stepping motor is fixedly provided with a mounting block (211), wherein the mounting block (211) is provided with a central circular hole;
a cylindrical connecting portion (233) is arranged on a lower side of the rotary disk (231), the connecting portion (233) is in rotation fit with the central circular hole, and the stepping motor is in transmission connection with the rotary disk (231) through the connecting portion (233);
the first photoelectric sensor (22) is disposed on the mounting block (211), a detection block (234) rotating synchronously with the rotary disk (231) is disposed on a lower side of the rotary disk (231), and the first photoelectric sensor (22) determines the rotational position of the docking assembly (23) by sensing the detection block (234).

7. The automated screening platform according to any one of claims 2-6, wherein the driving mechanism (30) comprises: a second driving component (31), a transmission assembly (32), a second photoelectric sensor (33), and a clamping jaw (34),
wherein the second driving component (31) is in transmission connection with the transmission assembly (32); the transmission assembly (32) is in transmission connection with the clamping jaw (34); the second photoelectric sensor (33) is configured to determine an initial position and an end position of the clamping jaw (34); the clamping jaw (34) is capable of clamping the injection push rod (151) and driving the injection push rod (151) to reciprocate in the lengthwise direction of the injection mechanism (15).

8. The automated screening platform according to claim 7, wherein the second driving component (31) comprises a stepping motor with an encoder, and the transmission assembly (32) comprises a synchronous belt (321), a synchronous pulley (322), a lead screw (323), a first guide rail (324), and a first slider (325),
wherein the synchronous belt (321) connects the stepping motor and the synchronous pulley (322); the synchronous pulley (322) is fixed at an end of the lead screw (323); the first slider (325) is in sliding fit with the first guide rail (324); the lead screw (323) is in threaded fit with the first slider (325); the lead screw (323) is parallel to the first guide rail (324); the clamping jaw (34) is fixed on the first slider (325).

9. The automated screening platform according to claim 8, wherein the lead screw (323) is fixed by two fixing assemblies (326), the first slider (325) is located between the two fixing assemblies (326), and the fixing assembly (326) comprises a bearing matched with the lead screw (323);
the clamping jaw (34) is an electric clamping jaw or a pneumatic clamping jaw.

10. The automated screening platform according to any one of claims 1-9, wherein the temperature control module (40) comprises: a moving module and a heating module, wherein the heating module is configured to heat the incubation cavity (12), and the moving module is connected to the heating module and is configured to drive the heating module to move in a horizontal direction and a vertical direction relative to the incubation cavity (12).

11. The automated screening platform according to claim 10, wherein the moving module comprises a third driving component (41), a second guide rail (42), a second slider (43), a first mounting plate (44), a second mounting plate (45), a fourth driving component (46), a third guide rail (47), and a third slider (48),
wherein the third driving component (41) and the second guide rail (42) are both fixed on the first mounting plate (44); the second slider (43) is in sliding fit with the second guide rail (42); the third driving component (41) is connected to the second slider (43) and is capable of driving the second slider (43) to slide along the second guide rail (42); the second mounting plate (45) is fixed on the second slider (43); the fourth driving component (46) and the third guide rail (47) are both fixed on the second mounting plate (45); the third slider (48) is in sliding fit with the third guide rail (47); the fourth driving component (46) is connected to the third slider (48) and is capable of driving the third slider (48) to slide along the third guide rail (47);
the heating module is fixed on the third slider (48).

12. The automated screening platform according to claim 11, wherein a third photoelectric sensor for determining a moving position of the second slider (43) is disposed on the first mounting plate (44), and a fourth photoelectric sensor for determining a moving position of the third slider (48) is disposed on the second mounting plate (45);
the third driving component (41) drives the second slider (43) to move in the vertical direction, and the fourth driving component (46) drives the third slider (48) to move in the horizontal direction;
both the first mounting plate (44) and the second mounting plate (45) are L-shaped.

13. The automated screening platform according to any one of claims 10-12, wherein the heating module comprises a heating block (401), a heating plate (402), a thermocouple (403), and a temperature control protection switch (404),
wherein the heating block (401) is provided with a hollow cavity, and an inlet is formed on a lower side of the hollow cavity to allow the incubation cavity (12) to enter the hollow cavity through the inlet for heating;
the heating plate (402) is located on a top of the heating block (401), the thermocouple (403) is configured to determine temperatures of the heating block (401) and the heating plate (402), and the temperature control protection switch (404) is configured to control heating states of the heating block (401) and the heating plate (402).

14. The automated screening platform according to any one of claims 1-13, further comprising a housing (80), wherein the automated screening device (10), the rotation module (20), the driving mechanism (30), the temperature control module (40), and the electronic control module (50) are all located inside the housing (80).

15. The automated screening platform according to claim 14, wherein the automated screening platform further comprises an ultraviolet disinfection system comprising an ultraviolet lamp (60), an air intake fan (61), and an air exhaust fan (62); the ultraviolet lamp (60) is located inside the housing (80); the air intake fan (61) is disposed at an air inlet of the housing (80); the air exhaust fan (62) is disposed at an air outlet of the housing (80); a display and operation screen (70) is disposed on an outer side of the housing (80).

16. A screening method, wherein the automated screening platform according to any one of claims 1-15 is used.

17. The screening method according to claim 16, wherein the screening method is used for screening a compound or drug.

18. The screening method according to claim 16 or 17, wherein the screening method comprises an incubation phase, a washing phase, and an elution phase.
